# EUROPÄISCHE PATENTSCHRIFT

(11) **EP 2 140 924 B1**
(45) Veröffentlichungstag und Bekanntmachung des Hinweises auf die Patenterteilung: **10.06.2015**
(21) Anmeldenummer: 09008442.7
(22) Anmeldetag: 29.06.2009
(51) Int. Cl.: B01D 53/04, B01D 53/26, B60T 17/00, F15B 21/00, F15B 21/04

(54) **Druckluftversorgungseinrichtung**
Compressed air supply device
Dispositif d'alimentation en air comprimé

(30) Priorität: 02.07.2008 DE 102008031326
(43) Veröffentlichungstag der Anmeldung: 06.01.2010
(73) Patentinhaber: KNORR-BREMSE Systeme für Nutzfahrzeuge GmbH, 80809 München (DE)
(72) Erfinder: Geiss-Esser, Daniel, 81927 München (DE)
(74) Vertreter: Schönmann, Kurt

(56) Entgegenhaltungen:
- EP-B1- 0 840 686
- US-A- 5 595 588

## Beschreibung

Die Erfindung betrifft eine Druckluftversorgungseinrichtung, insbesondere für ein Nutzfahrzeug, mit einem Ventilgehäuse und einer Lufttrocknerpatrone, wobei die Lufttrocknerpatrone im Wesentlichen zu einer Achse axialsymmetrisch aufgebaut ist, und wobei das Ventilgehäuse und die Lufttrocknerpatrone über eine erste Dichtung und eine zweite Dichtung miteinander verbunden sind, und wobei ein an dem Ventilgehäuse angeordneter in einer Kopplungsfläche zwischen Ventilgehäuse und Lufttrocknerpatrone liegender Anschlussbereich nicht in allen mit Bezug auf die Achse der Lufttrocknerpatrone definierten Winkelpositionen der Lufttrocknerpatrone gegenüber dem Ventilgehäuse mit einem an der Lufttrocknerpatrone angeordneten dem Anschlussbereich zugeordneten Kopplungsbereich zur Deckung bringbar ist.

Derartige Druckluftversorgungseinrichtungen beliefern Druckluftverbraucher in Nutzfahrzeugen mit aufbereiteter Druckluft. Typische Druckluftverbraucher sind beispielsweise ein pneumatisches Bremssystem oder eine Luftfederung. Eine Druckluftversorgungseinrichtung vereinigt zahlreiche Funktionen. Eine wichtige Aufgabe besteht in der Trocknung und Reinigung der Luft. Zu diesem Zweck ist eine Lufttrocknerpatrone vorgesehen, die Filtereinrichtungen und ein Trockenmittel enthält. Andere wichtige Aufgaben bestehen in der Druckregelung der von einem Kompressor gelieferten Druckluft sowie in der sicheren Verteilung der Druckluft auf die verschiedenen Verbraucherkreise. Diese Aufgaben werden durch Ventileinrichtungen, die in einem Ventilgehäuse untergebracht sind, übernommen und umfassen insbesondere einen Druckregler und ein Mehrkreisschutzventil. Moderne Druckluftversorgungseinrichtungen enthalten oft zusätzlich zu den pneumatischen Komponenten eine elektronische Steuerung sowie elektrisch ansteuerbare Komponenten, beispielsweise Magnetventile, und eine mit der elektronischen Steuerung in Verbindung stehende Sensorik. Die so ausgestatteten Druckluftversorgungseinrichtungen werden dann auch als EAC (Electronic Air Control) bezeichnet.

Da die Aufnahmefähigkeit der Lufttrocknerpatrone an Fremdstoffen und Feuchtigkeit begrenzt ist, muss diese in regelmäßigen zeitlichen Abständen beziehungsweise in Abhängigkeit von der Förderleistung des Kompressors regeneriert und schließlich ausgetauscht werden. Der Wartungsvorgang des Austauschs sollte nützlicherweise vom Fahrer des Nutzfahrzeugs selbst vorgenommen werden können, das heißt ohne die Hilfe einer Werkstatt. Folglich sind die Lufttrocknerpatronen gut zugänglich am Ventilgehäuse über ein mehrgängiges Gewinde angebracht. Muss der Fahrer des Nutzfahrzeugs die Lufttrocknerpatrone wechseln, so ist hierfür lediglich ein Abschrauben der Patrone erforderlich, wobei während des Abschraubvorgangs der im Druckluftsystem vorhandene Restdruck in unproblematischer Weise entweichen kann. Die neue Lufttrocknerpatrone kann dann über das Gewinde mit dem Ventilgehäuse verbunden werden.

An der Verbindungsart mittels eines Gewindes ist mitunter problematisch, dass der Fahrer des Nutzfahrzeuges ein Gefühl dafür haben muss, wie fest die Lufttrocknerpatrone auf das Ventilgehäuse aufzuschrauben ist. Dabei kann ihm ein an Bord mitzuführendes Werkzeug helfen, welches die in jedem Fall korrekte Montage sicherstellt, wobei die Mitführung des Werkzeugs dann aber einen zusätzlichen Aufwand darstellt. Weiterhin wird für die Gewindeverbindung eine gewisse zusätzliche Montagehöhe benötigt, was dem allgemeinen Bestreben der Bauraumverringerung von Fahrzeugkomponenten entgegensteht. Weiterhin kann auch eine für die Druckluftversorgungseinrichtung ungeeignete Lufttrocknerpatrone aufgeschraubt werden, da das Gewinde und der Durchmesser der Patrone weitgehend standardisiert sind.

Aus der EP 0 840 686 B1 ist eine Druckluftversorgungseinrichtung bekannt, wobei eine auf ein Ventilgehäuse aufsetzbare Lufttrocknerpatrone über eine zentrale Halteschraube an dem Ventilgehäuse fixierbar ist. Die vorhandenen Anschlussbereiche sind dabei axialsymmetrisch angeordnet, wobei das Aufsetzen der Lufttrocknerpatrone auf das Ventilgehäuse aufgrund von Nasen und zugehörigen Ausnehmungen nur in bestimmten Winkelpositionen der Lufttrocknerpatrone gegenüber dem Ventilgehäuse erfolgen kann.

Der Erfindung liegt die Aufgabe zugrunde, eine Druckluftversorgungseinrichtung zur Verfügung zu stellen, die bei geringer Montagehöhe eine fehlerfreie und sichere Montage der Lufttrocknerpatrone zulässt, wobei insbesondere eine Inbetriebnahme der Druckluftversorgungseinrichtung mit einer ungeeigneten Lufttrocknerpatrone verhindert werden soll.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass der Anschlussbereich und der zugeordnete Kopplungsbereich zu der Achse exzentrisch angeordnet sind, wenn die Lufttrocknerpatrone an dem Ventilgehäuse montiert ist. Bei der Montage der Lufttrocknerpatrone an dem Ventilgehäuse ist man somit gezwungen bestimmte Winkelpositionen der Lufttrocknerpatrone gegenüber dem Ventilgehäuse einzuhalten, um eine dichte Verbindung zwischen der Lufttrocknerpatrone und dem Ventilgehäuse herstellen zu können. Dies wird durch den Ausdruck "zur Deckung gebracht" umschrieben, der das passgenaue Aufeinandersetzen von Anschlussbereich und Kopplungsbereich, die hierfür jeweils gleiche Größe, Form und Position in der Kopplungsfläche aufweisen müssen, zum Ausdruck bringt. Werden Lufttrocknerpatronen unterschiedlicher Kapazität und Leistungsfähigkeit mit Kopplungsbereichen verschiedener Form und/oder

Größe ausgestattet, so ist eine Inbetriebnahme der Druckluftversorgungseinrichtung mit einer ungeeigneten Lufttrocknerpatrone vermeidbar, da der dem Anschlussbereich zugeordnete Kopplungsbereich sich in Größe, Form und/oder Position in der Kopplungsfläche von dem Anschlussbereich unterscheidet und daher bei der Montage nicht mit diesem zur Deckung gebracht werden kann. Die Lufttrocknerpatrone ist daher nicht dicht an dem Ventilgehäuse montierbar.

Weiterhin kann vorgesehen sein, dass der Anschlussbereich und der dem Anschlussbereich zugeordnete Kopplungsbereich mit Bezug auf die Achse der Lufttrocknerpatrone eine einzählige Symmetrieachse aufweisen. Durch das Vorsehen einer einzähligen Symmetrieachse des Anschlussbereichs und des dem Anschlussbereich zugeordneten Kopplungsbereichs wird sichergestellt, dass die Lufttrocknerpatrone nur in einer einzigen genau definierten Orientierung dicht an dem Ventilgehäuse montierbar ist.

Ebenfalls kann vorgesehen sein, dass an dem Ventilgehäuse ein in einer Kopplungsfläche zwischen Ventilgehäuse und Lufttrocknerpatrone liegender weiterer Anschlussbereich angeordnet ist, der nicht in allen mit Bezug auf die Achse der Lufttrocknerpatrone definierten Winkelpositionen der Lufttrocknerpatrone gegenüber dem Ventilgehäuse mit einem an der Lufttrocknerpatrone angeordneten dem weiteren Anschlussbereich zugeordneten weiteren Kopplungsbereich zur Deckung gebracht werden kann. In der Kopplungsfläche zwischen Lufttrocknerpatrone und Ventilgehäuse muss neben einem Bereich für die Zuführung zu trocknender Druckluft auch ein weiterer Bereich für die Abführung getrockneter Druckluft vorgesehen sein. Neben dem Anschlussbereich beziehungsweise dem Kopplungsbereich existiert daher oftmals ein weiterer Anschlussbereich beziehungsweise ein weiterer Kopplungsbereich, der vorteilhafterweise ebenfalls so ausgebildet ist, dass bei der Montage der Lufttrocknerpatrone an dem Ventilgehäuse definierte Winkelpositionen eingehalten werden müssen.

Vorzugsweise ist dabei vorgesehen, dass der weitere Anschlussbereich und der dem weiteren Anschlussbereich zugeordnete weitere Kopplungsbereich mit Bezug auf die Achse der Lufttrocknerpatrone eine einzählige Symmetrieachse aufweisen. Das Vorsehen einer einzähligen Symmetrieachse für den weiteren Anschlussbereich beziehungsweise den weiteren Kopplungsbereich erlaubt ebenfalls eine Montage der Lufttrocknerpatrone an dem Ventilgehäuse in nur einer einzigen genau definierten Orientierung.

Besonders bevorzugt ist dabei vorgesehen, dass der an der Lufttrocknerpatrone angeordnete Kopplungsbereich abseits von der Achse einen Vorsprung und/oder eine Ausnehmung umfasst und dass der an dem Ventilgehäuse angeordnete Anschlussbereich eine dem an der Lufttrocknerpatrone angeordneten Vorsprung und/oder der an der Lufttrocknerpatrone angeordneten Ausnehmung zugeordnete Vertiefung und/oder Nase umfasst, die im gekoppelten Zustand von Lufttrocknerpatrone und Ventilgehäuse ineinander greifen. Durch das Anordnen eines Vorsprungs und/oder einer Ausnehmung an dem Kopplungsbereich und das Anordnen einer dem Vorsprung und/oder der Ausnehmung zugeordneten Vertiefung beziehungsweise Nase, wird ein unbeabsichtigtes Verdrehen der auf das Ventilgehäuse aufgesetzten Lufttrocknerpatrone beim Fixieren an dem Ventilgehäuse verhindert. Die Kombination aus Ausnehmung und Nase beziehungsweise Vorsprung und Vertiefung stellt also eine Verdrehsicherung der Lufttrocknerpatrone bereit, wodurch Dichtungen im Bereich zwischen Ventilgehäuse und Lufttrocknerpatrone bei der Montage entlastet werden.

Nützlicherweise ist dabei vorgesehen, dass beim Zusammenführen von Lufttrocknerpatrone und Ventilgehäuse sich die an dem Ventilgehäuse angeordnete Vertiefung und/oder die Nase und der an der Lufttrocknerpatrone angeordnete zugeordnete Vorsprung und/oder die an der Lufttrocknerpatrone angeordnete zugeordnete Ausnehmung einander zuerst berühren. Sind die Abmessungen eines einander zugeordneten Paares aus Vertiefung und Vorsprung beziehungsweise Nase und Ausnehmung geeignet dimensioniert, das heißt insbesondere, dass der Vorsprung beziehungsweise die Nase ausreichend weit über die Kopplungsfläche in das gegenüberliegende Bauteil hineinragt, kann eine Montagehilfe in Form einer Vorzentrierung bereitgestellt werden, die die korrekte Ausrichtung der Lufttrocknerpatrone gegenüber dem Ventilgehäuse erleichtert.

In diesem Zusammenhang kann auch vorgesehen sein, dass der Vorsprung und/oder die Ausnehmung und die zugeordnete Vertiefung und/oder Nase im korrekt montierten Zustand zumindest teilweise formschlüssig ineinander ragen. Die zumindest teilweise formschlüssige Verbindung zwischen Vorsprung und Vertiefung beziehungsweise Ausnehmung und Nase ermöglicht ein exaktes Aufsetzen der Lufttrocknerpatrone auf das Ventilgehäuse, wobei dann lediglich noch eine endgültige Fixierung der Lufttrocknerpatrone auf dem Ventilgehäuse vorzusehen ist.

Wie schon im Zusammenhang mit dem Kopplungsbereich und dem Anschlussbereich kann nützlicherweise vorgesehen sein, dass der an der Lufttrocknerpatrone angeordnete weitere Kopplungsbereich abseits von der Achse einen weiteren Vorsprung und/oder eine weitere Ausnehmung umfasst und dass der an dem Ventilgehäuse angeordnete weitere Anschlussbereich eine dem an der Lufttrocknerpatrone angeordneten weiteren Vorsprung und/oder der an der Lufttrocknerpatrone angeordneten weiteren Ausnehmung zugeordnete weitere Vertiefung und/oder weitere Nase umfasst, die im gekoppelten Zustand von Lufttrocknerpatrone und Ventilgehäuse ineinander greifen. Auch auf diese Weise ist eine Verdrehsicherung der Lufttrocknerpatrone gegenüber dem Ventilgehäuse realisierbar.

Weiterhin kann vorgesehen sein, dass beim Zusammenführen von Lufttrocknerpatrone und Ventilgehäuse sich die an dem Ventilgehäuse angeordnete weitere Vertiefung und/oder weitere Nase und der an der Lufttrocknerpatrone angeordnete zugeordnete weitere Vorsprung und/oder die and der Lufttrocknerpatrone angeordnete zugeordnete weitere Ausnehmung einander zuerst berühren. Auf diese Weise wird wieder eine Montagehilfe in Form einer Vorzentrierung der Lufttrocknerpatrone bereitgestellt.

Nüztlicherweise kann wieder vorgesehen sein, dass der weitere Vorsprung und/oder die weitere Ausnehmung und die zugeordnete weitere Vertiefung und/oder die zugeordnete weitere Nase im korrekt montierten Zustand zumindest teilweise formschlüssig ineinander ragen.

Vorzugsweise ist vorgesehen, dass das Ventilgehäuse und die Lufttrocknerpatrone mit einem Bajonettverschluss im gekoppelten Zustand fixierbar sind. Durch einen Bajonettverschluss ist die korrekt auf das Ventilgehäuse aufgesetzte Lufttrocknerpatrone an dem Ventilgehäuse fixierbar, ohne dass die Lufttrocknerpatrone selbst gegenüber dem Ventilgehäuse gedreht werden muss. Alternative Möglichkeiten zur Fixierung der Lufttrocknerpatrone an dem Ventilgehäuse sind jedoch in verschiedenen dem Fachmann bekannten Arten möglich. Insbesondere kann die Lufttrocknerpatrone auch mit Hilfe von Schrauben an dem Ventilgehäuse verschraubt werden oder durch Schnappverschlüsse an dem Ventilgehäuse fixiert werden. Wesentlich für die Auswahl der Befestigungsmittel der Lufttrocknerpatrone an dem Ventilgehäuse ist lediglich, dass die Lufttrocknerpatrone fixierbar ist, ohne selbst gegenüber dem Ventilgehäuse gedreht zu werden.

In diesem Zusammenhang ist besonders bevorzugt, dass das Ventilgehäuse und die Lufttrocknerpatrone durch achsparalleles Zusammenführen koppelbar sind. Durch das achsparallele Zusammenführen von Lufttrocknerpatrone und Ventilgehäuse wird die zwischenliegende Dichtung bei der Montage entlastet.

Die Erfindung wird nun mit Bezug auf die begleitenden Zeichnungen anhand bevorzugter Ausführungsformen beispielhaft erläutert

Es zeigen:
- Figur 1: einen Querschnitt durch eine auf ein Ventilgehäuse aufgesetzte Lufttrocknerpatrone;
- Figur 2: eine beispielhafte Darstellung einer Kopplungsfläche;
- Figur 3: eine Seitenansicht eines Anschluss- und eines Kopplungsbereichs;
- Figur 4: eine vereinfachte Darstellung einer Lufttrocknerpatrone und eines oberen Bereichs eines zugehörigen Ventilgehäuses und
- Figur 5: eine schematische Darstellung einer erfindungsgemäßen Druckluftversorgungseinrichtung in einem Nutzfahrzeug.

In den folgenden Zeichnungen bezeichnen gleiche Bezugszeichen gleiche oder gleichartige Teile.

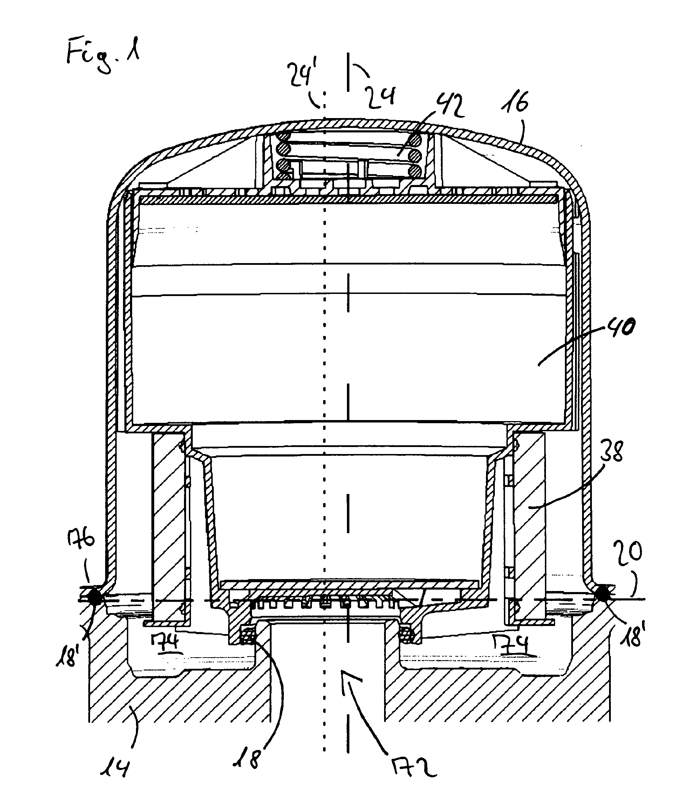

Figur 1 zeigt einen Querschnitt durch eine auf ein Ventilgehäuse aufgesetzte Lufttrocknerpatrone. Die dargestellte Lufttrocknerpatrone 16 umfasst eine mit einem Trockenmittel gefüllte Trockenmittelbox 40, eine das Trockenmittel in der Trockenmittelbox 40 komprimierende Feder 42 und einen Filter 38, der in die Lufttrocknerpatrone 16 einströmende Druckluft von Öl- und Schmutzpartikeln befreit. Die Lufttrocknerpatrone 16 ist im Wesentlichen zu einer Achse 24 axialsymmetrisch aufgebaut, wobei ein Luftauslass 72 der durch eine erste Dichtung 18 und eine zweite Dichtung 18' gegenüber einem Lufteinlass 74 abgedichtet wird, nicht symmetrisch zu der Achse 24 sondern symmetrisch zu einer weiteren Achse 24' angeordnet ist, die mit der Achse 24 nicht zusammenfällt. Weiterhin ist eine Kopplungsfläche 20 eingezeichnet, in welcher der Lufteinlass 74 und der Luftauslass 72 liegen. Die Kopplungsfläche 20 muss nicht zwangsläufig eine Ebene sein, sondern kann eine beliebige Grenzfläche zwischen der Luftfilterpatrone 16 und einem Ventilgehäuse 14 definieren. Die Ausführung der Kopplungsfläche 20 als im Wesentlichen ebene Fläche wird jedoch besonders bevorzugt. Die Kopplungsfläche 20 kann in einem beliebigen von Null verschiedenen Winkel zur Achse 24 ausgerichtet sein, das heißt insbesondere, dass die Kopplungsfläche 20 nicht senkrecht zur Achse 24 orientiert sein muss. Über den Lufteinlass 74 in die Lufttrocknerpatrone 16 einströmende Druckluft tritt zunächst durch den Filter 38 hindurch und steigt zwischen der Hülle der Lufttrocknerpatrone 16 und der Trockenmittelbox 40 nach oben, in den Bereich in welchem die Feder 42 angeordnet ist. Dort tritt sie in die Trockenmittelbox 40 ein und wird, nachdem Öl- und Schmutzpartikel bereits in dem Filter 38 abgeschieden wurden, durch das Trockenmittel getrocknet, bevor die aufbereitete Druckluft durch den Luftauslass 72 die Lufttrocknerpatrone 16 wieder verlässt. Am unteren Rand der Lufttrocknerpatrone 16 ist weiterhin eine Auskragung 76 sichtbar, die dicht an dem Ventilgehäuse 14 anliegt und eine äußere Begrenzung der Kopplungsfläche 20 darstellt. Über die Auskragung 76 ist die Lufttrocknerpatrone 16 an dem Ventilgehäuse 14 fixiert und über die zweite Dichtung 18' nach außen hin abgedichtet. Die Fixierung kann zum Beispiel durch einen Bajonettverschluss erfolgen. Eine Befestigung mithilfe von Schrauben ist jedoch genauso möglich wie eine Fixierung durch einen Schnapp- oder Klemmverschluss.

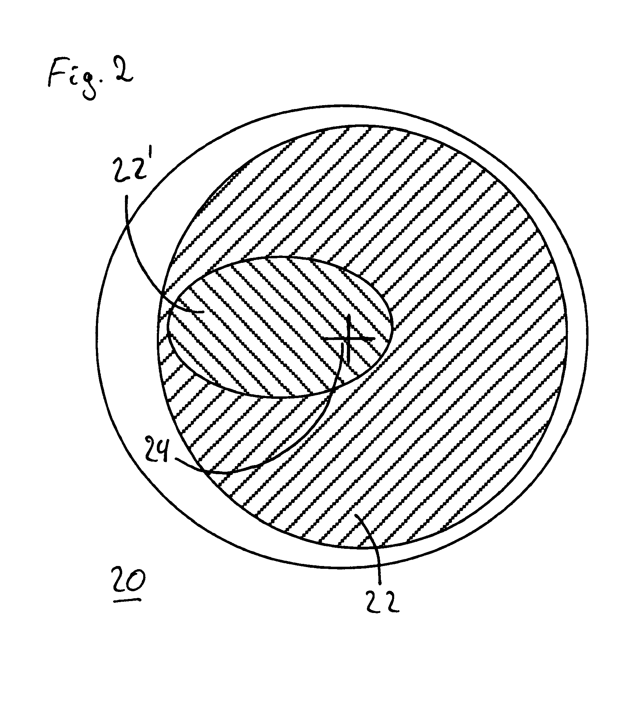

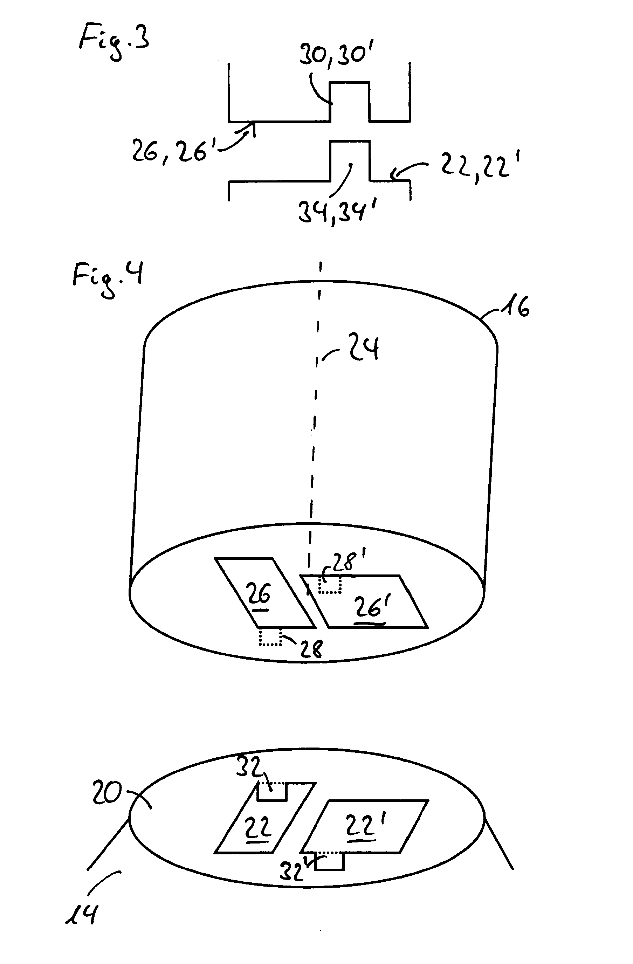

Figur 2 zeigt eine beispielhafte Darstellung einer Kopplungsfläche. Die in Figur 2 dargestellte Kopplungsfläche 20 stellt im Wesentlichen eine kreisrunde Grundfläche des aus Figur 1 bekannten Ventilgehäuses 14 dar, auf welche eine Lufttrocknerpatrone aufgesetzt wird. Innerhalb der kreisrunden Kopplungsfläche 20 sind ein Anschlussbereich 22 und ein weiterer Anschlussbereich 22' schraffiert eingezeichnet. Der Anschlussbereich 22 könnte dabei beispielsweise dem Lufteinlassbereich 72 aus Figur 1 entsprechen und der weitere Anschlussbereich 22' könnte dann dem Luftauslassbereich 74 aus Figur 1 entsprechen. Die beiden Anschlussbereiche 22, 22' sind zu einer Achse 24 exzentrisch angeordnet, weshalb eine Lufttrocknerpatrone mit den beiden Anschlussbereichen 22, 22' zugeordneten Öffnungen lediglich in einer einzigen Orientierung aufgesetzt werden kann, wenn die beiden durch die Anschlussbereiche 22, 22' definierten Flächen mit den ihnen zugeordneten Öffnungen in einer Lufttrocknerpatrone zur Deckung gebracht werden sollen. Die dargestellten Anschlussbereiche 22, 22' weisen gegenüber der Achse 24 eine einzählige Drehsymmetrie auf, d.h., dass erst nach eine vollen Drehung um 360° wieder dieselbe Anordnung der Anschlussbereiche 22, 22' auf der Kopplungsfläche 20 erreicht wird. Eine aufzusetzende Lufttrocknerpatrone kann deshalb nur in einer einzigen Orientierung dicht aufgesetzt werden. Formen mit einer gegenüber der Achse 24 höheren Drehsymmetrie können jedoch auch für die Anschlussbereiche 22, 22' gewählt werden. Dies wird im Zusammenhang mit Figur 4 nochmals genauer erläutert.

Figur 3 zeigt eine Seitenansicht eines Anschluss- und eines Kopplungsbereichs. Dargestellt ist eine seitliche Ansicht des den Anschlussbereich 22 beziehungsweise den weiteren Anschlussbereich 22' begrenzenden Kontur sowie eine seitliche Ansicht der eine Kopplungsfläche 26 beziehungsweise eine weitere Kopplungsfläche 26' begrenzenden Kontur. Die Konturen weisen jeweils eine Ausnehmung 30 beziehungsweise 30' und eine zugehörige Nase 34 beziehungsweise eine weitere Nase 34' auf. Die Abmessungen der Ausnehmungen 30, 30' sind dabei so auf die Nasen 34, 34' abgestimmt, dass die Nasen 34, 34' in montiertem Zustand der Lufttrocknerpatrone formschlüssig in den Ausnehmungen aufgenommen werden können. Sobald die Nasen 34, 34' zumindest teilweise in die zugehörigen Ausnehmungen 30 beziehungsweise 30' hineinragen, ist eine Verdrehsicherung und eine Vorzentrierung der Lufttrocknerpatrone gegenüber dem Ventilgehäuse gegeben. Für eine effektive Verdrehsicherung beziehungsweise Vorzentrierung sind dabei zwei verschiedene Nasen 34, 34' mit zugeordneten Ausnehmungen 30, 30' notwendig, die dann sinnvollerweise bezüglich der aus den Figuren 1 und 2 bekannten Achse 24 eine einzählige Drehsymmetrie besitzen.

Figur 4 zeigt eine vereinfachte Darstellung einer Lufttrocknerpatrone mit einem oberen Bereichs eines zugehörigen Ventilgehäuses. Auf der Unterseite der Lufttrocknerpatrone 16 sind der Kopplungsbereich 26 und der weitere Kopplungsbereich 26' mit einem Vorsprung 28 beziehungsweise einem weiteren Vorsprung 28' schematisch dargestellt. Die Vorsprünge 28, 28' und die Kopplungsbereiche 26, 26' weisen gegenüber einer Achse 24 eine einzählige Drehsymmetrie auf. Die dargestellte Lufttrocknerpatrone 16 kann achsparallel, das heißt entlang der Achse 24 auf das angedeutete Ventilgehäuse 14 mit der Kopplungsfläche 20 aufgesetzt werden. In der Kopplungsfläche 20 sind die den Kopplungsbereichen 26, 26' zugehörigen Anschlussbereiche 22 beziehungsweise 22' mit einer Vertiefung 32 beziehungsweise einer weiteren Vertiefung 32' zur Aufnahme des Vorsprungs 28 beziehungsweise 28' angeordnet. Wird die Lufttrocknerpatrone 16 entlang der Achse 24 gegenüber dem Ventilgehäuse 14 um einen Winkel gedreht, der ungleich 360° oder einem Vielfachen davon ist, so liegen die Kopplungsbereiche 26, 26' nicht mehr deckungsgleich über den zugehörigen Anschlussbereichen 22, 22'. Somit ist eine dichte Verbindung zwischen der Lufttrocknerpatrone 16 und dem Ventilgehäuse 14 in diesen Orientierungen der Lufttrocknerpatrone 16 gegenüber dem Ventilgehäuse 14 nicht möglich. Ein korrektes Aufsetzen der Lufttrocknerpatrone 16 auf das Ventilgehäuse 14 ist lediglich in einer einzigen, der dargestellten, Orientierung möglich. Die Ausgestaltung der Form der Kopplungsbereiche 26, 26' beziehungsweise der Anschlussbereiche 22, 22' kann beliebig gewählt werden. Es sind sowohl runde als auch elliptische oder eckige Flächen für die Anschluss- beziehungsweise Kopplungsbereiche 26, 26', 22, 22' wählbar. Somit wird eine Optimierung der Anordnung innerhalb der Lufttrocknerpatrone 16 beziehungsweise des Ventilgehäuses 14 ermöglicht. Die Anzahl der vorhandenen Kopplungs- beziehungsweise Anschlussbereiche 26, 26', 22, 22' kann beliebig groß werden.

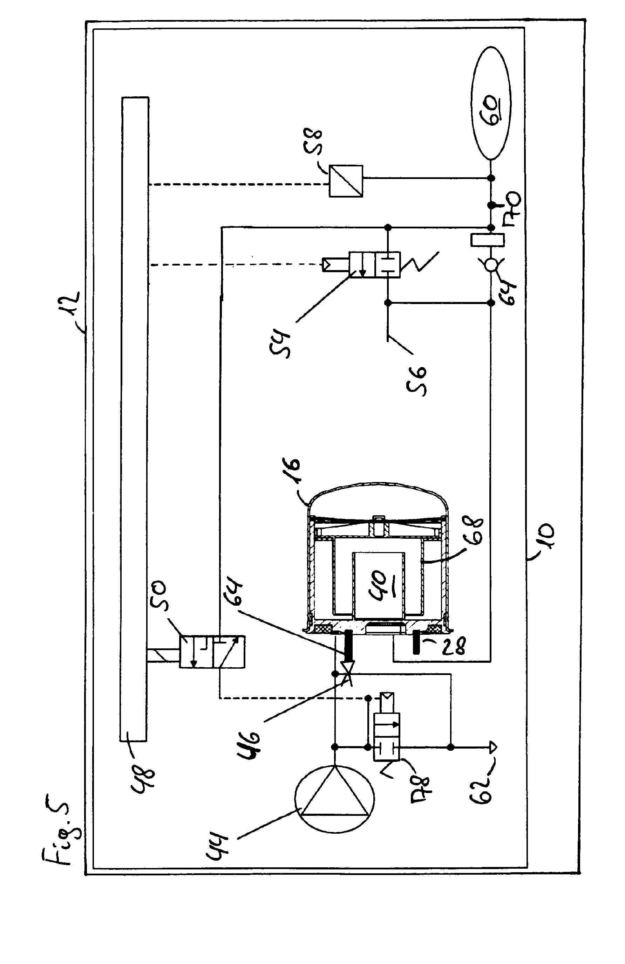

Figur 5 zeigt eine schematische Darstellung einer erfindungsgemäßen Druckluftversorgungseinrichtung in einem Nutzfahrzeug. Die schematisch vereinfachte Darstellung der Druckluftversorgungsanlage 10 in dem Nutzfahrzeug 12 umfasst einen Kompressor 44, ein Steuergerät 48 zur Steuerung des Systems, einen Druckregler 50, der als ein Magnetventil ausgeführt ist, ein Regenerationsventil 54, das als Magnetventil ausgeführt ist, einen Drucksensor 58, einen stromabwärts eines Rückschlagventils 66 angeordneten Vorratsbehälter 60, einen Anschluss 70 an ein Mehrkreisschutzventil, eine Lufttrocknerpatrone 16 und eine Entlüftung 62, die über eine absperrbare Drossel 46 eine Verbindung mit einem Zapfen mit einem Gummiventilsitz 64 herstellt. Weiterhin ist ein Ablassventil 78 vorgesehen, welches zur Regeneration der Lufttrocknerpatrone 16 und zur Druckregelung der Druckluftversorgungseinrichtung 10 benötigt wird.

Bei der dargestellten Ausführungsform wird eine Inbetriebnahme der Druckluftversorgungseinrichtung 10 bei nicht ordnungsgemäßer Montage oder falscher Lufttrocknerpatrone 16, die auch eine Labyrinthstruktur 68 umfassen kann, auch durch die Konstruktion des optionalen Zapfens 64 verhindert, der auch ein aus Figur 4 bekannter Vorsprung 28 beziehungsweise eine aus Figur 3 bekannte Nase 34 sein kann. Der Zapfen 64 ist hohl und weist an einem Ende einen Gummiventilsitz auf, der mit einer Entlüftungsbohrung gekoppelt ist, und als 2/2-Wegeventil arbeitet. Die Entlüftungsbohrung stellt wiederum eine Verbindung zur Entlüftungsvorrichtung 62 der Druckluftversorgungseinrichtung 10 bereit. Das heißt, dass im Falle einer Undichtigkeit der Verbindung zwischen dem Zapfen 64 und der ihn aufnehmenden Ausnehmung ebenfalls ein Druckaufbau in der Druckluftversorgungseinrichtung 10 durch die sonst durch den Zapfen 64 verschlossene Drossel 46 verhindert wird. Dies tritt üblicherweise nur auf, wenn eine falsche, das heißt mechanisch nicht passende, Luftfilterpatrone 16 verbaut wurde. Da der Druckverlust über die Entlüftungseinrichtung 62 der Druckluftversorgungseinrichtung 10 realisiert ist, arbeitet diese Ausführungsform beim Druckaufbau verhältnismäßig leise.

### Bezugszeichenliste

- 10: Druckluftversorgungseinrichtung
- 12: Nutzfahrzeug
- 14: Ventilgehäuse
- 16: Lufttrocknerpatrone
- 18: erste Dichtung
- 18': zweite Dichtung
- 20: Kopplungsfläche
- 22: Anschlussbereich
- 22': weiterer Anschlussbereich
- 24: Achse
- 24': weitere Achse
- 26: Kopplungsbereich
- 26': weiterer Kopplungsbereich
- 28: Vorsprung
- 28': weiterer Vorsprung
- 30: Ausnehmung
- 30': weitere Ausnehmung
- 32: Vertiefung
- 32': weitere Vertiefung
- 34: Nase
- 34': weitere Nase
- 38: Filter
- 40: Trockenmittelbox
- 42: Feder
- 44: Kompressor
- 46: absperrbare Drosselstelle
- 48: Steuergerät
- 50: Druckregler
- 54: Regenerationsventil
- 56: Anschluss ESS
- 58: Drucksensor
- 60: Vorratsbehälter
- 62: Entlüftung
- 64: Zapfen mit Gummiventilsitz
- 66: Rückschlagventil
- 68: Labyrinthstruktur
- 70: Anschluss Mehrkreisschutzventil
- 72: Luftauslass
- 74: Lufteinlass
- 76: Auskragung
- 78: Ablassventil

## Patentansprüche

1. Druckluftversorgungseinrichtung (10), insbesondere für ein Nutzfahrzeug (12), mit einem Ventilgehäuse (14) und einer Lufttrocknerpatrone (16), wobei die Lufttrocknerpatrone (16) im Wesentlichen zu einer Achse (24) axialsymmetrisch aufgebaut ist, und wobei das Ventilgehäuse (14) und die Lufttrocknerpatrone (16) über eine erste Dichtung (18) und eine zweite Dichtung (18') miteinander verbunden sind, und wobei ein an dem Ventilgehäuse (14) angeordneter in einer Kopplungsfläche (20) zwischen Ventilgehäuse (14) und Lufttrocknerpatrone (16) liegender Anschlussbereich (22) nicht in allen mit Bezug auf die Achse (24) der Lufttrocknerpatrone (16) definierten Winkelpositionen der Lufttrocknerpatrone (16) gegenüber dem Ventilgehäuse (14) mit einem an der Lufttrocknerpatrone (16) angeordneten dem Anschlussbereich (22) zugeordneten Kopplungsbereich (26) zur Deckung bringbar ist, **dadurch gekennzeichnet, dass** der Anschlussbereich (22) und der zugeordnete Kopplungsbereich (26) zu der Achse (24) exzentrisch angeordnet sind, wenn die Lufttrocknerpatrone (16) an dem Ventilgehäuse (14) montiert ist.

2. Druckluftversorgungseinrichtung (10) nach Anspruch 1, **dadurch gekennzeichnet, dass** der Anschlussbereich (22) und der dem Anschlussbereich (22) zugeordnete Kopplungsbereich (26) mit Bezug auf die Achse (24) der Lufttrocknerpatrone (16) eine einzählige Symmetrieachse aufweisen.

3. Druckluftversorgungseinrichtung (10) nach Anspruch 1 oder 2, **dadurch gekennzeichnet, dass** an dem Ventilgehäuse (14) ein in einer Kopplungsfläche (20) zwischen Ventilgehäuse (14) und Lufttrocknerpatrone (16) liegender weiterer Anschlussbereich (22') angeordnet ist, der nicht in allen mit Bezug auf die Achse (24) der Lufttrocknerpatrone (16) definierten Winkelpositionen der Lufttrocknerpatrone (16) gegenüber dem Ventilgehäuse (14) mit einem an der Lufttrocknerpatrone (16) angeordneten dem weiteren Anschlussbereich (22') zugeordneten weiteren Kopplungsbereich (26') zur Deckung gebracht werden kann.

4. Druckluftversorgungseinrichtung (10) nach Anspruch 3, **dadurch gekennzeichnet, dass** der weitere Anschlussbereich (22') und der dem weiteren Anschlussbereich (22') zugeordnete weitere Kopplungsbereich (26') mit Bezug auf die Achse (24) der Lufttrocknerpatrone (16) eine einzählige Symmetrieachse aufweisen.

5. Druckluftversorgungseinrichtung (10) nach einem der vorhergehenden Ansprüche, **dadurch gekennzeichnet,**
- **dass** der an der Lufttrocknerpatrone (16) angeordnete Kopplungsbereich (26) abseits von der Achse (24) einen Vorsprung (28) und/oder eine Ausnehmung (30) umfasst und
- **dass** der an dem Ventilgehäuse (14) angeordnete Anschlussbereich (22) eine dem an der Lufttrocknerpatrone (16) angeordneten Vorsprung (28) und/oder der an der Lufttrocknerpatrone (16) angeordneten Ausnehmung (30) zugeordnete Vertiefung (32) und/oder Nase (34) umfasst, die im gekoppelten Zustand von Lufttrocknerpatrone (16) und Ventilgehäuse (14) ineinander greifen.

6. Druckluftversorgungseinrichtung (10) nach Anspruch 5, **dadurch gekennzeichnet, dass** beim Zusammenführen von Lufttrocknerpatrone (16) und Ventilgehäuse (14) sich die an dem Ventilgehäuse (14) angeordnete Vertiefung (32) und/oder die Nase (34) und der an der Lufttrocknerpatrone (16) angeordnete zugeordnete Vorsprung (28) und/oder die an der Lufttrocknerpatrone (16) angeordnete zugeordnete Ausnehmung (30) einander zuerst berühren.

7. Druckluftversorgungseinrichtung (10) nach Anspruch 5 oder 6, **dadurch gekennzeichnet, dass** der Vorsprung (28) und/oder die Ausnehmung (30) und die zugeordnete Vertiefung (32) und/oder Nase (34) im korrekt montierten Zustand zumindest teilweise formschlüssig ineinander ragen.

8. Druckluftversorgungseinrichtung (10) nach einem der Ansprüche 5 bis 7, **dadurch gekennzeichnet,**
- **dass** der an der Lufttrocknerpatrone (16) angeordnete weitere Kopplungsbereich (26') abseits von der Achse (24) einen weiteren Vorsprung (28') und/oder eine weitere Ausnehmung (30') umfasst und
- **dass** der an dem Ventilgehäuse (14) angeordnete weitere Anschlussbereich (22') eine dem an der Lufttrocknerpatrone (16) angeordneten weiteren Vorsprung (28') und/oder der an der Lufttrocknerpatrone (16) angeordneten weiteren Ausnehmung (30') zugeordnete weitere Vertiefung (32') und/oder weitere Nase (34') umfasst, die im gekoppelten Zustand von Lufttrocknerpatrone (16) und Ventilgehäuse (14) ineinander greifen.

9. Druckluftversorgungseinrichtung (10) nach Anspruch 8, **dadurch gekennzeichnet, dass** beim Zusammenführen von Lufttrocknerpatrone (16) und Ventilgehäuse (14) sich die an dem Ventilgehäuse (14) angeordnete weitere Vertiefung (32') und/oder weitere Nase (34') und der an der Lufttrocknerpatrone (16) angeordnete zugeordnete weitere Vorsprung (28') und/oder die an der Lufttrocknerpatrone (16) angeordneten zugeordnete weitere Ausnehmung (30') einander zuerst berühren.

10. Druckluftversorgungseinrichtung (10) nach Anspruch 8 oder 9, **dadurch gekennzeichnet, dass** der weitere Vorsprung (28') und/oder die weitere Ausnehmung (30') und die zugeordnete weitere Vertiefung (32') und/oder die zugeordnete weitere Nase (34') im korrekt montierten Zustand zumindest teilweise formschlüssig ineinander ragen.

11. Druckluftversorgungseinrichtung (10) nach einem der vorhergehenden Ansprüche, **dadurch gekennzeichnet, dass** das Ventilgehäuse (14) und die Lufttrocknerpatrone (16) mit einem Bajonettverschluss im gekoppelten Zustand fixierbar sind.

12. Druckluftversorgungseinrichtung (10) nach einem der vorhergehenden Ansprüche, **dadurch gekennzeichnet, dass** das Ventilgehäuse (14) und die Lufttrocknerpatrone (16) durch achsparalleles Zusammenführen koppelbar sind.

13. Ventilgehäuse (14) für eine Druckluftversorgungseinrichtung (10), nach einem der vorhergehenden Ansprüche, wobei das Ventilgehäuse (14) mit einer Lufttrocknerpatrone (16) lösbar verbindbar ist.

14. Lufttrocknerpatrone (16) für eine Druckluftversorgungseinrichtung (10) nach einem der vorhergehenden Ansprüche, wobei die Lufttrocknerpatrone (16) mit einem Ventilgehäuse (14) lösbar verbindbar ist.

## Claims

1. Compressed air supply device (10), in particular for commercial vehicles (12), comprising a valve housing (14) and an air drier cartridge (16), wherein the air drier cartridge (16) is constructed to be substantially axially symmetric relative to an axis (24), and wherein the valve housing (14) and the drier cartridge (16) are joined to one another via a first seal (18) and a second seal (18'), and wherein a connecting region (22) located on the valve housing (14) and lying in a coupling face (20) between the valve housing (14) and the drier cartridge (16) cannot be made congruent with a coupling region (26) located on the air drier cartridge (16) and assigned to the connecting region (22) in all angular positions of the drier cartridge (16) relative to the valve housing (14) as defined in respect of the axis (24) of the drier cartridge (16), **characterised in that** the connecting region (22) and the associated coupling region (26) are arranged to be eccentric relative to the axis (24) when the drier cartridge (16) is mounted on the valve housing (14).

2. Compressed air supply device (10) according to claim 1, **characterised in that** the connecting region (22) and the coupling region (26) assigned to the connecting region (22) have a singular axis of symmetry relative to the axis (24) of the drier cartridge (16).

3. Compressed air supply device (10) according to claim 1 or 2, **characterised in that** a further connecting region (22'), which cannot be made congruent with a further coupling region (26') located on the drier cartridge (16) and assigned to the further connecting region (22') in all angular positions of the air drier cartridge (16) relative to the valve housing (14) as defined in respect of the axis (24) of the air drier cartridge (16), is located on the valve housing (14) in a coupling face (20) between the valve housing (14) and the drier cartridge (16).

4. Compressed air supply device (10) according to claim 3, **characterised in that** the further connecting region (22') and the further coupling region (26') assigned to the further connecting region (22') have a singular axis of symmetry relative to the axis (24) of the drier cartridge (16).

5. Compressed air supply device (10) according to any of the preceding claims, **characterised in that**
- the coupling region (26) located on the drier cartridge (16) comprises a projection (28) and/or a recess (30) away from the axis (24), and
- the connecting region (14) located on the valve housing (14) comprises an indentation (32) and/or a nose (34), which are assigned to the projection (28) on the air drier cartridge (16) and/or to the recess (30) on the air drier cartridge (16) and which are in engagement with one another in the coupled state of the drier cartridge (16) and the valve housing (14).

6. Compressed air supply device (10) according to claim 5, **characterised in that** the indentation (32) and/or the nose (34) on the valve housing (14) and the associated projection (28) on the air drier cartridge (16) and/or the associated recess (30) on the air drier cartridge (16) initially contact one another during the assembly of the air drier cartridge (16) and the valve housing (14).

7. Compressed air supply device (10) according to claim 5 or 6, **characterised in that** the projection (28) and/or the recess (30) and the associated indentation (32) and/or nose (34) at least partially project positively into one another in the correctly assembled state.

8. Compressed air supply device (10) according to any of claims 5 to 7, **characterised in that**
- the further coupling region (26') located on the air drier cartridge (16) comprises a further projection (28') and/or a further recess (30') away from the axis (24), and
- the further connecting region (22') located on the valve housing (14) comprises a further indentation (32') and/or a further nose (34'), which are assigned to the further projection (28') on the air drier cartridge (16) and/or the further recess (30') on the air drier cartridge (16) and which are in engagement with one another in the coupled state of the drier cartridge (16) and the valve housing (14).

9. Compressed air supply device (10) according to claim 8, **characterised in that** the further indentation (32') and/or the further nose (34') on the valve housing (14) and the associated further projection (28') on the air drier cartridge (16) and/or the associated further recess (30') on the air drier cartridge (16) initially contact one another during the assembly of the air drier cartridge (16) and the valve housing (14).

10. Compressed air supply device (10) according to claim 8 or 9, **characterised in that** the further projection (28') and/or the further recess (30') and the associated further indentation (32') and/or the associated further nose (34') at least partially project positively into one another in the correctly assembled state.

11. Compressed air supply device (10) according to any of the preceding claims, **characterised in that** the valve housing (14) and the air drier cartridge (16) can be secured with a bayonet fixing in the coupled state.

12. Compressed air supply device (10) according to any of the preceding claims, **characterised in that** the valve housing (14) and the air drier cartridge (16) can be coupled by means of axially parallel assembly.

13. Valve housing (14) for a compressed air supply device (10) according to any of the preceding claims, wherein the valve housing (14) can be releasably joined to an air drier cartridge (16).

14. Air drier cartridge (16) for a compressed air supply device (10) according to any of the preceding claims, wherein the air drier cartridge (16) can be releasably joined to a valve housing (14).

## Revendications

1. Dispositif (10) d'alimentation en air comprimé, notamment pour un véhicule (12) utilitaire, comprenant un corps (14) de vanne et une cartouche (16) de dessiccateur d'air, la cartouche (16) de dessiccateur d'air étant constituée sensiblement à symétrie axiale par rapport à un axe (24) et dans lequel le corps (14) de vanne et la cartouche (16) de dessiccateur d'air sont reliés entre eux par un premier joint (18) et par un deuxième joint (18') et dans lequel une zone (22) de raccord, disposée sur le corps (14) de vanne et se trouvant dans une surface (20) de couplage entre le corps (14) de vanne et la cartouche (16) de dessiccateur d'air, ne peut pas être mise en recouvrement avec une zone (26) de couplage, disposée sur la cartouche (16) de dessiccateur d'air et associée à la zone (22) de raccord, dans toutes les positions angulaires, définies par rapport à l'axe (24) de la cartouche (16) de dessiccateur d'air, de la cartouche (16) de dessiccateur d'air par rapport au corps (14) de vanne, **caractérisé en ce que** la zone (22) de raccord et la zone (26) de couplage associée sont disposées de manière excentrée par rapport à l'axe (24) lorsque la cartouche (16) de dessiccateur d'air est montée sur le corps (14) de vanne.

2. Dispositif (10) d'alimentation en air comprimé suivant la revendication 1, **caractérisé en ce que** la zone (22) de raccord et la zone (26) de couplage associée à la zone (22) de raccord ont un seul et même axe de symétrie par rapport à l'axe (24) de la cartouche (16) de dessiccateur d'air.

3. Dispositif (10) d'alimentation en air comprimé suivant la revendication 1 ou 2, **caractérisé en ce que** sur le corps (14) de vanne est disposée une autre zone (22') de raccord, qui se trouve dans une surface (20) de couplage entre le corps (14) de vanne et la cartouche (16) de dessiccateur d'air et qui ne peut pas être mise à recouvrement avec une autre zone (26') de couplage, disposée sur la cartouche (16) de dessiccateur d'air et associée à l'autre zone (22') de raccord, dans toutes les positions angulaires, définies par rapport à la l'axe (24) de la cartouche (16) de dessiccateur d'air, de la cartouche (16) de dessiccateur d'air par rapport au corps (14) de vanne.

4. Dispositif (10) d'alimentation en air comprimé suivant la revendication 3, **caractérisé en ce que** l'autre zone (22') de raccord et l'autre zone (26') de couplage associée à l'autre zone (22') de raccord ont un seul et même axe de symétrie par rapport à l'axe (24) de la cartouche (16) de dessiccateur d'air.

5. Dispositif (10) d'alimentation en air comprimé suivant l'une des revendications précédentes, **caractérisé**
- **en ce que** la zone (26) de couplage, disposée sur la cartouche (16) de dessiccateur d'air, comprend, à l'écart de l'axe (24), une saillie (28) et/ou un évidemment (30) et
- **en ce que** la zone (22) de raccord, disposée sur le corps (14) de vanne, comprend une saillie (28) disposée sur la cartouche (16) de dessiccateur d'air et/ou une cavité (32) et/ou un bec (34) associé à l'évidemment (30) disposé sur la cartouche (16) de dessiccateur d'air, qui s'interpénètrent lorsque la cartouche (16) de dessiccateur d'air et le corps (14) de vanne sont à l'état couplé.

6. Dispositif (10) d'alimentation en air comprimé suivant la revendication 5, **caractérisé en ce que**, lorsque la cartouche (16) de dessiccateur d'air et le corps (14) de vanne sont réunis, la cavité (32) et/ou le bec (34) disposé sur le corps (14) de vanne et la saillie (28) associée et disposée sur le cartouche (16) de dessiccateur d'air et/ou l'évidemment (30) associé et disposé sur la cartouche (16) de dessiccateur d'air se touchent d'abord l'un l'autre.

7. Dispositif (10) d'alimentation en air comprimé suivant la revendication 5 ou 6, **caractérisé en ce que** la saillie (28) et/ou l'évidemment (30) et/ou la cavité (32) et/ou le bec (34) associé s'interpénètrent à complémentarité de forme au moins en partie à l'état monté correctement.

8. Dispositif (10) d'alimentation en air comprimé suivant les revendications 5 à 7, **caractérisé en ce que**
- **en ce que** l'autre zone (26') de couplage, disposée sur la cartouche (16) de dessiccateur d'air, comprend à l'écart de l'axe (24) une autre saillie (28') et/ou un autre évidemment (30') et
- **en ce que** l'autre zone (22') de raccord, disposée sur le corps (14) de vanne, comprend une autre saillie (28') disposée sur la cartouche (16) de dessiccateur d'air et/ou une autre cavité (32') et/ou un autre bec (34') associé à l'autre évidemment (30') disposé sur la cartouche (16) de dessiccateur d'air, qui s'interpénètrent, lorsque la cartouche (16) de dessiccateur d'air et le corps (14) de vanne sont à l'état couplé.

9. Dispositif (10) d'alimentation en air comprimé suivant la revendication 8, **caractérisé en ce que**, lorsque la cartouche (16) de dessiccateur d'air et le corps (14) de vanne sont réunis, l'autre cavité (32') et/ou l'autre bec (34') disposé sur le corps (14) de vanne et l'autre saillie (28') associée et disposée sur la cartouche (16) de dessiccateur d'air et/ou l'autre évidemment (30') associé et disposé sur la cartouche (16) de dessiccateur d'air se touchent d'abord l'un l'autre.

10. Dispositif (10) d'alimentation en air comprimé suivant la revendication 8 ou 9, **caractérisé en ce que** l'autre saillie (28') et/ou l'autre évidemment (30') et l'autre cavité (32') associée et/ou l'autre bec (34') associé s'interpénètrent par complémentarité de forme au moins en partie à l'état monté correctement.

11. Dispositif (10) d'alimentation en air comprimé suivant l'une des revendications précédentes, **caractérisé en ce que** le corps (14) de vanne et la cartouche (16) de dessiccateur d'air peuvent être immobilisés à l'état couplé par une fermeture à baïonnette.

12. Dispositif (10) d'alimentation en air comprimé suivant l'une des revendications précédentes, **caractérisé en ce que** le corps (14) de vanne et la cartouche (16) de dessiccateur d'air peuvent être couplés en étant réunis d'une manière parallèle à l'axe.

13. Corps (14) de vanne pour un dispositif (10) d'alimentation en air comprimé suivant l'une des revendications précédentes, le corps (14) de vanne pouvant être relié d'une manière amovible à une cartouche (16) de dessiccateur d'air.

14. Cartouche (16) de dessiccateur d'air pour un dispositif (10) d'alimentation en air comprimé suivant l'une des revendications précédentes, la cartouche (16) de dessiccateur d'air pouvant être reliée d'une manière amovible à un corps (14) de vanne.
